(19) Europäisches Patentamt
European Patent Office
Office européen des brevets

(11) **EP 3 185 493 A1**

(12) **EUROPEAN PATENT APPLICATION**

(43) Date of publication:
**28.06.2017 Bulletin 2017/26**

(51) Int Cl.:
*H04L 12/801* (2013.01)     *H04L 12/851* (2013.01)
*H04L 12/833* (2013.01)

(21) Application number: **15290331.6**

(22) Date of filing: **24.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventor: **DE VLEESCHAUWER, Danny**
**2018 Antwerpen (BE)**

(74) Representative: **Plas, Axel Ivo Michel**
**IP HILLS NV**
**Hubert Frère-Orbanlaan 329**
**9000 Gent (BE)**

(54) **DATA PACKET TRANSPORT LAYER WITH UTILITY BASED FAIRNESS**

(57) A sender node (101, 102; 200) comprising a transport layer transmitter (201) transmits data packets (210) of one or more data streams (DS1, DS2), each data packet (210) having a transport layer overhead section (211) and transport layer payload section (212). The transport layer transmitter (201) determines for a data stream (DS1, DS2) a utility value indicative for the utility perceived for that data stream (DS1, DS2) and embeds the utility value in a utility field (213) of the transport layer overhead section (211) of a data packet (210) of that data stream (DS1, DS2) before transmission. The utility value is used in the drop/mark decision by intermediate network nodes (111, 112, 113, 114, 115; 300), receiving nodes (121, 122, 123; 400) and policing nodes (500) to obtain a fair share of available transport layer capacity based on utility.

Fig. 2

**Description**

**Technical Field**

Embodiments of the present invention generally relate to data packet transport in communications networks, more particularly to congestion control or equivalent mechanisms that are implemented at the transport layer in such a network to monitor and control that all senders of data packets share the available transport capacity of the network fairly and efficiently.

**Background**

Existing congestion control mechanisms rely on congestion signals that are sent by network nodes or receivers to senders. If a network node gets overloaded, i.e. reaches a state of congestion, this network node will mark, delay or drop data packets. The mark, delay or drop decision is signalled directly to the sender or to the receiver which relays the signals to the sender. As a result, the sender can adapt the rate at which data packets are sent. A sender may for instance half its data transmit rate on detection that a data packet was delayed, dropped or marked. Existing congestion control mechanisms assume that it is always desired by a sender to send more data packets to receivers. A sender consequently shall increase its data rate over time, for instance linearly, when no delayed, dropped or marked packets are signalled to the sender.

The explicit Congestion control Protocol or XCP is such a feedback based mechanism wherein network nodes, e.g. routers, and the receiver provide signals to the sender enabling the latter to adapt its transmit rate. The sender signals its current transmit rate and a desired rate increment in the header of a data packet sent. Intermediate network nodes and the receiver modify the rate increment value in the header of the data packet based on their respective congestion status, and the receiver returns the final increment value to the sender enabling the sender to adapt the data transmit rate.

XCP is disadvantageous because the sender does not indicate how useful the requested rate increment is. In a traditional scenario wherein the sender aims to transfer an existing file as quickly as possible to a receiver, it is important for the sender to maximally use the available transport capacity in the network. Getting a higher share of the available capacity will enable the sender to increase its effective data rate or throughput as a result of which the existing file will be transferred faster to the receiver. More and more however, applications use the Transmission Control Protocol (TCP) or similar transport layer protocols for streaming data. In a streaming data application, the receiver consumes the data shortly after the data trickles in, which is usually also shortly after the data has been produced. Such streaming applications generally also benefit from a higher share in the available capacity but often, they can only transfer data at a limited number of specific data rates that correspond for instance to low definition (LD) video or high definition (HD) video. Increasing the data rate for such a streaming application with a certain increment does not necessarily substantially increase the quality of the streaming application. That is, most streaming applications have a soft upper limit on their bit rate above which the increase in bit rate does no longer result in a noticeable increase in quality. A sender hence may request a data rate increment that will not further improve the quality of the application. XCP has no means to distinguish such non-useful data rate increment requests from useful data rate increment requests.

DiffServ or Differentiated Services is another existing mechanism that enables to control the data rates at which senders are transmitting based on signalling, the so called DSCP or DiffServ Code Point values in the headers of data packets. In DiffServ, a data packet arriving at a network node is temporarily stored in one out of maximum 64 queues based on its DSCP value. Each of the queues is governed by its own Active Queue Management (AQM) mechanism. As a result of temporary changes in the data traffic mix, one queue may get overloaded while another queue is still virtually empty. Theoretically, it would be possible to dynamically share the total available link capacity over the different queues but in practice it is difficult to find algorithms that achieve this fast enough.

Apart from the difficulty to develop algorithms that share the available link capacity in a useful and efficient manner across the DiffServ queues, DiffServ is disadvantageous in that at most 64 different behaviours can be implemented using the 64 DSCP values. Usually, some DSCP values are reserved for specific services like Expedited Forwarding (EF) as a result of which even less than 64 queues can be managed through AQM and less than 64 different behaviours can be implemented.

DiffServ further does not teach how to set the DSCP values in the headers of IP packets other than providing some static guidelines. As a consequence, the DSCP values are not an indication of how useful the throughput is that a sender receives.

In yet another existing mechanism, TCP send buffer advertising, the sender of data packets signals the amount of data that the sending socket buffer holds in the header of the packets. This information in the header of packets can be used for traffic rerouting, traffic monitoring, traffic management and eventually also for policing purposes, i.e. drop/mark/delay decisions by network nodes.

Just like XCP or DiffServ, TCP send buffer advertising does not indicate how useful the throughput is that a sender receives from the network. Some senders are self-limiting, i.e. they do not send at a data rate higher than a specific rate regardless of the throughput that is offered by the network.

A disadvantage of TCP send buffer advertising is that the amount of data in the sending socket buffer does not always represent the true backlog status of an application. An application may refrain from sending data to the sending socket buffer and buffer some data in its own memory.

Further, TCP send buffer advertising does not take into account that applications may react to the throughput that the network offers, thus impacting the future evolution of the backlog.

## Summary

It is an objective of embodiments of the present invention to disclose a transport layer mechanism that enables to share the available capacity in the network more efficiently amongst senders. More particularly, it is an objective to disclose a sender node, intermediate network node and receiving node that implement mechanisms at the transport layer that aim for fair utility of the available capacity rather than fair share. It is for instance an objective to enable senders for which an increase in data rate is not important any more, e.g. because such increase does not further improve the quality of the application or service, to voluntarily release some of their fair share throughput such that other senders for which an increase in data rate would really improve the quality of the application or service, can obtain a larger throughput than what traditional mechanisms like XCP, DiffServ or TCP send buffer advertising would deliver.

Embodiments of the invention disclose a sender node as defined by claim 1, comprising a transport layer transmitter adapted to transmit data packets of one or more data streams, each data packet having a transport layer overhead section and transport layer payload section, the transport layer transmitter comprising:

- a utility value determination unit adapted to determine for a data stream a utility value indicative for the utility perceived for the data stream; and
- a utility field generation unit adapted to embed the utility value in a utility field of the transport layer overhead section of a data packet of the data stream before transmission.

Thus, a sender node according to an embodiment of the present invention signals the utility of the current throughput offered by the network as perceived by the sender. Based on such utility value and depending on the congestion state, policers, intermediate network nodes or receiving nodes can then decide to delay, mark or drop a data packet. Senders that signal that the utility of a certain data stream was high will see data packets of that data stream be delayed, marked or dropped more than data packets of a data stream which signals that its utility was low. Senders that reach their soft upper limit in data rate, i.e. the data rate limit above which the quality of the application or service no longer noticeably improves, can release some transport layer resources for other sources, i.e. other senders or other data streams, by setting their utility value high, limiting their own throughput so that the other sources can increase their throughput, and hence their quality as they did not reach their soft upper limit yet.

Optionally, as defined by claim 2, the transport layer transmitter in embodiments of the sender node according to the present invention is a Transmission Control Protocol or TCP transmitter, the data packets are TCP packets, and the utility field is a TCP Options field.

This way, the utility value may be embedded in the headers of TCP packets without requiring modification of the TCP standard. The TCP header at present consists of a fixed part and a number of optional fields, the TCP Options fields. The fixed part of the header may indicate that a TCP Options field is used to contain a utility value, i.e. a value determined by the sender of the TCP packet that indicates the utility perceived by the sender for the data stream where the TCP packet belongs to. The transmission of TCP data packets with utility value embedded in a TCP Options field is backwards compatible with the transmission of traditional TCP packets that do not convey such utility value. For TCP packets with a utility value, nodes will delay, mark or drop packets taking into account to utility value. For TCP packets without a utility value are treated as legacy packets, i.e., their delay/mark/drop probability does not change in comparison to traditional TCP.

In accordance with a further optional aspect, defined by claim 3, the utility value in embodiments of the sender node according to the invention is determined through a concave function of the measured throughput of the data stream.

Indeed, the utility value $\kappa$ determined by the sender of a data packet typically is a concave function of the measured throughput $R$ for the data stream where the data packet belongs to: at low throughput it rises quickly, while at higher throughput it flattens.

In embodiments of the sender node according to the present invention, defined by claim 4, the utility value is determined by:

$$\kappa = \beta \cdot \frac{\left(\frac{R}{R_{REF}}\right)^{1-\alpha} - 1}{1-\alpha} \qquad (1)$$

wherein:

$\kappa$ represents the utility value;

$\alpha$ represents a concavity parameter with positive value, i.e. $\alpha > 0$;

$\beta$ represents the elasticity of the utility with respect to a relative increase in bit rate $(R - R_{REF}) / R_{REF}$, having a positive value, i.e. $\beta > 0$;

R represents the measured throughput of the data stream; and

$R_{REF}$ represents an application desired minimal throughput for the data stream.

The above utility value $\kappa$ is a concave function of the throughput R and therefore a good candidate utility function for use in embodiments of the sender node according to the present invention. The concavity of the function is determined by the parameter $\alpha$ that depends on the application and gets a positive value, preferably a value between 0 and 1. Also the desired minimal throughput $R_{REF}$ is an application dependent parameter. $\beta$ represents the elasticity of the utility value $\kappa$ for a relative increase in bit rate, i.e. a measure for the impact of a change of one variable on the change of another variable. The utility value hence is calculated using information that is application or service specific, i.e. the bitrate or throughput currently perceived by the application or service, a desired minimal throughput, and a desired behaviour represented by a concavity parameter.

In embodiments of the sender node according to the present invention, defined by claim 5, the utility value is determined by:

$$\kappa = \beta \cdot \ln\left(\frac{R}{R_{REF}}\right) \qquad (2)$$

wherein:

$\kappa$ represents said utility value;

$\beta$ represents the elasticity of the utility with respect to a relative increase in bit rate $(R - R_{REF}) / R_{REF}$, having a positive value, i.e. $\beta > 0$;

R represents the measured throughput of said data stream; and

$R_{REF}$ represents an application desired minimal throughput for said data stream, i.e. for $R > R_{REF}$ the utility is positive.

It is noticed that the utility function (1) reduces to the utility function (2) when the concavity parameter $\alpha$ is equal to 1. The utility function (2) is still concave and represents a simpler function to determine the utility value at the sender side. It is therefore a good candidate utility function to implement in sender nodes.

In addition to a sender node as defined by claim 1, embodiments of the present invention concern a corresponding transport layer transmitting method as defined by claim 6, for transmitting data packets of one or more data streams at the transport layer, each data packet having a transport layer overhead section and transport layer payload section, the method comprising:

- determining for a data stream a utility value indicative for the utility perceived for the data stream; and
- embedding the utility value in a utility field of the transport layer overhead section of a data packet of the data stream before transmission.

According to another aspect, embodiments of the present invention entail an intermediate network node as defined by claim 7, comprising a transport layer transceiver adapted to receive data packets of one or more data streams, temporarily store the data packets in a buffer, and transmit the data packets towards respective destinations, each data packet having a transport layer overhead section and transport layer payload section, the transport layer transceiver comprising:

- a transport layer processor adapted to extract a utility value from a utility field of the transport layer overhead section of a received data packet; and
- a data packet drop/mark engine adapted to take a drop or mark decision for the data packet depending on the utility value and a buffer fill level of the buffer.

Thus, an intermediate node will mark or drop data packets belonging to a certain data stream with a probability that depends on its congestion state, i.e. its buffer fill level, and the utility value contained in the data packets of that data stream. Packets that signal that their utility was high, will be marked/dropped with a higher probability. Packets that signal that their utility was low, will be marked/dropped with a lower probability. This way, the overall network transport capacity share is dynamically moving from applications and services that experience a high utility to applications and services that experience a low utility.

In embodiments of the intermediate node according to the present invention, defined by claim 8, the drop or mark decision is determined through a drop or mark probability function that is increasing with increasing values of said utility value.

Indeed, a typical probability function $F(\kappa)$ will be an increasing function of the utility value $\kappa$. For a particular utility value $\kappa_0$, the probability function $\Gamma(\kappa_0) = 1$ so that data packets that are marked with that particular utility vale $\kappa_0$ are treated as legacy packets. A sender that signals a higher utility will then see an artificially higher congestion level whereas a sender that signals a lower congestion level will see an artificially lower congestion level.

In embodiments of the intermediate node according to the present invention, defined by claim 9, the probability function is determined by:

$$\Gamma(\kappa) = p_0 . e^{2\gamma\kappa} \qquad (3)$$

wherein:

$\Gamma$ represents said probability function;
$\kappa$ represents said utility value;
$p_0$ represents a traditional active queue management (AQM) mark probability; and
$\gamma$ represents a design parameter whose value is selected in trade-off between convergence and oscillation of throughput rates of said one or more data streams.

Indeed, if it is assumed that TCP RENO is implemented at the end points, then the throughput that a source i of a data stream sees depends on the marking rate:

$$R_i = \frac{C}{RTT_i \cdot \sqrt{p_i}} \qquad (4)$$

wherein:

C represents a constant value;
$R_i$ represents the data rate or throughput as seen by the sender node;
$RTT_i$ is the round trip time; and
$p_i$ is the marking rate seen by the sender node.

The data rate seen by the source in other words is inversely proportional to the square root of the packet loss. A good candidate for the marking function in intermediate network nodes therefore is (4).

In addition to an intermediate network node as defined by claim 7, embodiments of the present invention also concern a corresponding transport layer processing method as defined by claim 10, for processing data packets at the transport layer comprising receiving data packets of one or more data streams, temporarily storing the data packets in a buffer, and transmitting the data packets towards respective destinations, each data packet having a transport layer overhead section and transport layer payload section, the method further comprising:

- extracting a utility value from a utility field of the transport layer overhead section of a received data packet; and
- taking a drop or mark decision for the data packet depending on the utility value and a buffer fill level of the buffer.

In accordance with another aspect, embodiments of the invention entail a receiver node as defined by claim 11, comprising a transport layer receiver adapted to receive data packets of one or more data streams, each data packet having a transport layer overhead section and transport layer payload section, the transport layer receiver comprising:

- an acknowledgement transmitter adapted to transmit an acknowledgement message in return to a received data packet,

- a transport layer processor adapted to extract a utility value from a utility field of the transport layer overhead section of the received data packet; and wherein
- the acknowledgement transmitter is adapted to embed the utility value in the acknowledgement message.

In other words, embodiments of a data packet receiver according to the invention may embed received utility values in the acknowledgment messages that are returned to the senders. In particular when congestion is also expected in the backwards channel, the utility values may be used to also share the available network capacity in the backwards direction more efficiently, i.e. based on the experienced utility. If however it is not desired to mark/drop data packets in the backwards channel based on the utility, it is not useful to embed a utility value in the acknowledgement messages.

In addition to a receiving node as defined by claim 11, embodiments of the present invention also entail a corresponding transport layer receiving method as defined by claim 12, for receiving data packets of one or more data streams at the transport layer, each data packet having a transport layer overhead section and transport layer payload section, the method comprising transmitting an acknowledgement message in return to a received data packet, the method further comprising:

- extracting a utility value from a utility field of the transport layer overhead section of the received data packet; and
- embedding the utility value in the acknowledgement message.

In accordance with a further aspect, embodiments of the present invention also entail a policing network node as defined by claim 13, comprising a transport layer monitor adapted to monitor data packets of plural data streams, each data packet having a transport layer overhead section and transport layer payload section, the transport layer monitor comprising:

- a utility value monitor adapted to monitor a utility value from a utility field of the transport layer overhead section of received data packets;
- a utility value comparator adapted to compare utility values of data packets belonging to different data streams;
- a packet drop/mark engine adapted to drop or mark data packets belonging to a data stream whose monitored utility values represent an outlier.

Thus, a policing node may monitor data packets at the transport layer over a longer period, e.g. a day, week or month. The policing node may for instance count the number of data packets sent with a particular utility value and determine a histogram for each source, e.g. a data stream, application, service or sender node. A source that represents an outlier in the histogram may be penalized by the policing node. The number of data packets from that source that are marked/dropped will be increased by the policer.

In optional embodiments of the policing network node according to the present invention, defined by claim 14:

- the utility value comparator is adapted to maintain a histogram of utility values for each one of said data streams; and
- the packet drop/mark engine is adapted to consider a data stream as an outlier when the percentage of utility values below a predetermined first threshold exceeds a predetermined second threshold.

Hence, as already indicated here above, one way to compare sources may be based on the histograms of sent utility values. In case a source sends more low utility values in order to systematically get a higher share of the available network capacity, its histogram for low utility values will represent an outlier, and a policing node will increase the drop/mark rate for such source. This way, malicious sources that misuse the utility based sharing of network transport capacity to obtain a higher share will be penalized by a policer, e.g. at the entrance of the network. Instead of dropping data packets of such sources, the policing node may mark the data packets of such sources, e.g. systematically increase the utility value carried by the data packets of such sources.

In addition to a policing network node as defined by claim 13, embodiments of the present invention also entail a corresponding transport layer policing method as defined by claim 15, comprising monitoring data packets of plural data streams, each data packet having a transport layer overhead section and transport layer payload section, the transport layer policing method comprising:

- monitoring a utility value from a utility field of the transport layer overhead section of received data packets;
- comparing utility values of data packets belonging to different data streams; and
- dropping or marking data packets belonging to a data stream whose monitored utility values represent an outlier.

**Brief Description of the Drawings**

Fig. 1 illustrates a TCP network 110 wherein an embodiment of the present invention is implemented;

Fig. 2 illustrates an embodiment of the sender node 200 according to an embodiment of the present invention;

Fig. 3 illustrates an embodiment of the intermediate network node 300 according to an embodiment of the present invention;

Fig. 4 illustrates an embodiment of the receiver node 400 according to an embodiment of the present invention;

Fig. 5 illustrates an embodiment of the policing network node 500 according to an embodiment of the present invention; and

Fig. 6 illustrates a computer system that can be configured to execute one or more embodiments of the transport layer transmitting method, transport layer processing method, transport layer receiving method and/or transport layer policing method according to embodiments of the present invention.

**Detailed Description of Embodiment(s)**

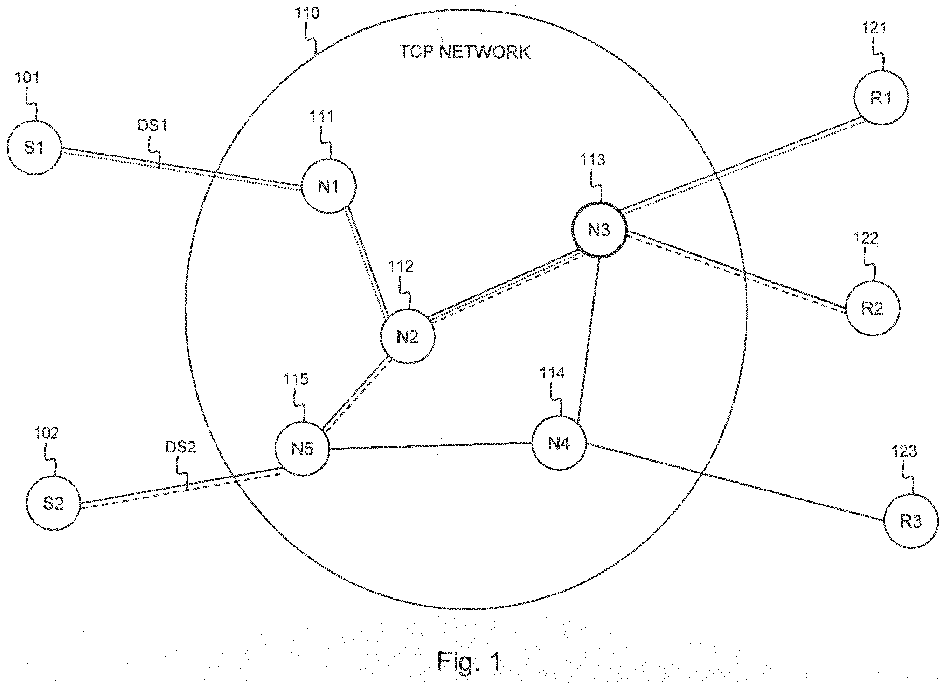

Fig. 1 shows a TCP network 110, i.e. a network wherein the Transmission Control Protocol is used at the transport layer of the protocol stack. The TCP network 110 comprises 5 network nodes, 111 or N1, 112 or N2, 113 or N3, 114 or N4 and 115 or N5, that are drawn in Fig. 1. Fig. 1 further shows two senders, 101 or S1 and 102 or S2, and three receivers, 121 or R1, 122 or R2 and 123 or R3. In a first data stream DS1, data packets are transferred from sender 101 to receiver 121 via network nodes 111, 112 and 113. This first data stream DS1 is denoted by a dotted line in Fig. 1. In a second data stream DS2, data packets are transferred from sender 102 to receiver 122 via network nodes 115, 112 and 113. This second data stream DS2 is denoted by a dashed line in Fig. 1. The available capacity on the outgoing links of the senders 101-102, the links towards the receivers 121-123, the links between the network nodes 111-115 as well as the processing and buffering capacity of the network nodes 111-115 must be shared between the data streams DS1 and DS2, and eventual other data streams not drawn in Fig. 1. In the particular example of Fig. 1, at least the internal resources, e.g. the available processing and buffering capacity, of network nodes 112 and 113 will be shared between DS1 and DS2, and also the capacity of the link between nodes 112 and 113 will be shared between data streams DS1 and DS2. The sharing of capacity between DS1, DS2 and eventual other data streams in Fig. 1 will be utility based. Thereto, the senders 101-102 embed utility values in the data packets sent, the utility values being indicative for the utility or usefulness of the bit rate or throughput as perceived for the respective data stream.

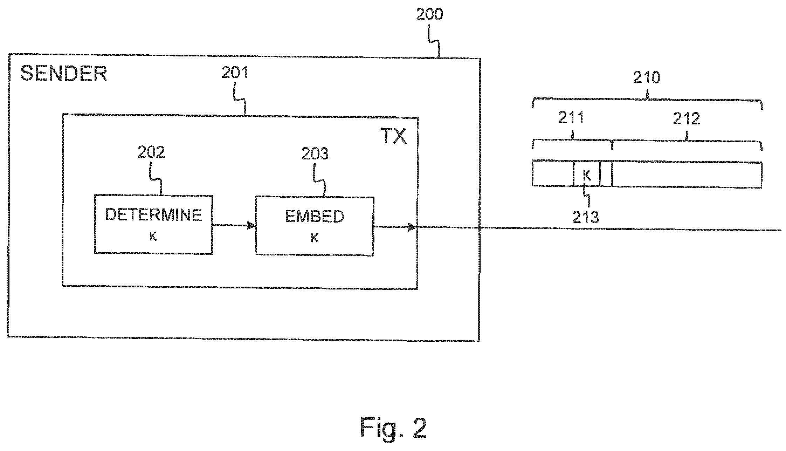

Fig. 2 shows the functional blocks of a sender 200 according to an embodiment of the present invention, e.g. sender 101 or 102 of Fig. 1. The sender 200 comprises a transport layer transmitter TX or 201, i.e. a transmitting unit that embeds data from an application or service and overhead information into TCP packets and transmits these TCP packets. Abstraction is made of the lower layer protocols, e.g. the physical layer and MAC layer protocols that are used by the sender 200 to transmit the TCP packets, as the technology used at these underlying layers of the protocol stack is not relevant in view of embodiments of the present invention. The transport layer transmitter 201 apart from the traditional functionality to encapsulate data in the payload section of TCP packets and to encapsulate overhead information in the header of TCP packets, comprises a unit 202 that determines for the data stream where a TCP packet belongs to a utility value $\kappa$. The transport layer transmitter 201 further comprises a unit 203 that embeds the utility value $\kappa$ in a dedicated field of the TCP packet header, for instance named the utility field. This results in TCP packets 210 being sent by sender 200 that consist of a TCP packet header 211 and overhead section 212, with utility field 213 in the packet header 211. Although this is not mandatory, the utility field in the example of Fig. 2 is assumed to be a TCP Options field. The utility value $\kappa$ in a TCP data packet 210 is encoded in n bits in the packet header, n being an integer value equal to or larger than 1. As a consequence, there are $2^n$ possible utility values $\kappa = 0, 1, ... 2^n-1$. The utility function, i.e. the function implemented by the utility determination unit 202 in sender 200 to determine the utility value $\kappa$ in function of the bit rate or throughput R seen by sender 200 for the corresponding data stream typically is concave: at low bit rate R the utility function rises quickly, while at higher bit rate R the utility function flattens. An example of such utility function is:

$$\kappa = \beta \cdot \ln\left(\frac{R}{R_{REF}}\right) \tag{5}$$

wherein:

$\kappa$ represents the utility value;
$\beta$ represents the elasticity of the utility value with respect to a relative increase in bit rate $(R-R_{REF}) / R_{REF}$, $\beta$ having a positive value;
R represents the measured throughput of the data stream, e.g. DS1 for sender 101 or DS2 for sender 102; and
$R_{REF}$ represents an application desired minimal throughput for the respective data stream DS1 or DS2. At bit rates below / $R_{REF}$, the utility becomes negative.

That (5) is a good candidate utility function results from that logarithmic human perception: a double bit rate or throughput does not result in a double quality perception but rather a quality perception increased by a factor ln(2). Another example of such utility function is:

$$\kappa = \beta \cdot \frac{\left(\frac{R}{R_{REF}}\right)^{1-\alpha} - 1}{1-\alpha} \tag{6}$$

wherein:

$\kappa$ represents the utility value;
$\alpha$ represents a concavity parameter that depends on the application or service, with $\alpha > 0$;
$\beta$ represents the elasticity of the utility value with respect to a relative increase in bit rate $(R-R_{REF}) / R_{REF}$, $\beta$ having a positive value;
R represents the measured throughput of the data stream DS1 or DS2; and
$R_{REF}$ represents an application desired minimal throughput for the respective data stream DS1 or DS2.

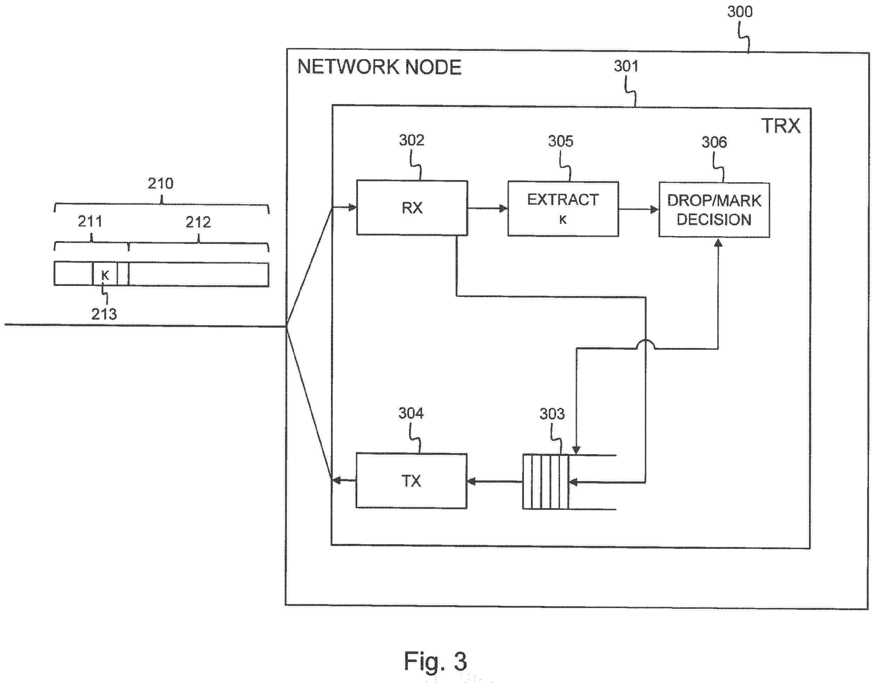

Fig. 3 shows the functional blocks of a network node 300 operating according to an embodiment of the present invention, e.g. network nodes 111-115 in Fig. 1. The network node 300 comprises a transport layer transceiver TRX or 301 with TCP packet receiver RX or 302 and TCP packet transmitter TX or 304. In addition, the transport layer transceiver 301 comprises a unit 305 that processes a received TCP packet 210 and in particular extracts the utility value $\kappa$ from the utility field 213 of such received TCP packet 210. Unit 305 reports the extracted utility value $\kappa$ to another unit 306 that takes a drop/mark decision for the received TCP packet 210 in view of the utility value $\kappa$ and the buffer fill level of a buffer 303 wherein TCP receiver 302 temporarily stores received TCP packets 210 before being transmitted by TCP transmitter 304.

It is assumed that in case of a traditional AQM (active queue management) scheme, a network node would mark or drop a received TCP packet 210 with a probability $p_0$. For instance, if an AQM scheme is used, it is assumed that the average buffer level is currently such that in absence of an embodiment of the present invention based on utility values on average a fraction $p_0$ of the packets needs to be dropped or marked. To ensure backwards compatibility, $p_0$ is still the marking or dropping probability in node 300 for TCP packets that do not have a utility field. For TCP packets like 210 with a utility field 213 in the header, the drop/mark decision unit 306 in the network node 300 drops or marks a packet with a utility value equal to $\kappa$ with a probability $p_0.\lambda(\kappa)$, where $\lambda(\kappa)$ is an increasing function of $\kappa$ and where for some value $\kappa_0$, $\lambda(\kappa_0) = 1$, so that TCP packets marked with a utility value equal to $\kappa_0$ are treated as legacy packets that have no utility field. As a consequence of the fact that $\lambda(\kappa)$ is an increasing function of $\kappa$, senders that signal a high utility see an artificially higher congestion level and senders that signal a low utility see an artificially lower congestion level. If it is assumed that TCP RENO is implemented in the end points, i.e. the senders linearly increase their bit rate as long as no marked packet is seen and drop their bit rate by half when a marked packet is seen, then the throughput a sender i sees, e.g. the throughput that sender 101 for data stream DS2 or sender 102 for data stream DS2, depends on the data packet marking rate as follows:

$$R_i = \frac{C}{RTT_i \cdot \sqrt{p_i}} \tag{7}$$

Herein,

C represents a constant value, close to 1;

Ri represents the bit rate or throughput seen by sender i for a data stream;

$RTT_i$ represents the round trip time the sender i sees for data packets, i.e. the time between transmission of a data packet and receipt of acknowledgement for that data packet; and

$p_i$ represents the marking rate that the sender i sees, i.e. the probability that data packets sent by sender i are marked or dropped by network nodes.

The bit rate or throughput that a sender i sees for a data stream hence is inversely proportional to the square-root of the packet loss $p_i$. A good candidate for the utility marking function that is used by the drop/mark decision unit 306 in a network node 300 when the sender implements the utility function (5), is therefore:

$$\Gamma(\kappa) = p_0 . e^{2\gamma\kappa} \tag{8}$$

wherein:

$\Gamma$ represents the utility marking function, i.e. the probability that a TCP packet 210 of a particular data stream will be marked or dropped by network node 300;

$\kappa$ represents the utility value extracted by unit 305 from TCP packet 210;

$p_0$ represents a traditional active queue management (AQM) mark probability dependent on the fill length of buffer 303; and

$\gamma$ represents a design parameter whose value is selected in trade-off between convergence and oscillation of throughput rates of the data streams DS1 and DS2. The factor 2 is introduced to compensate for the square-root.

For the utility function (6), a similar utility marking function can be construed.

In order to explain how the value of design parameter $\gamma$ is selected, a situation is considered with two types of sources: N small definition or SD sources have a utility $\kappa_n = \ln(R_n/R_s)$ and M high definition or HD sources have a utility $\kappa_{N+m} = \ln(R_{N+m}/R_H)$ with $R_H > R_S$. All sources have the same round trip time. It is assumed that at start up all sources send at the same bit rate C/(N+M) with C the capacity of the bottleneck in the network. In accordance with embodiments of the present invention, the SD sources will signal a higher utility than the HD sources, and hence, will experience a higher packet loss/marking as a result of which they will be inclined to drop their bit rate, while the opposite holds for the HD sources. This will converge to a situation where the rates of the SD sources and HD sources are different, but their utilities are close to each other. The converged utilities come closer together when $\gamma$ increases but there are other restrictions that need to be imposed on $\gamma$, e.g., if $\gamma$ is too large the system starts to oscillate.

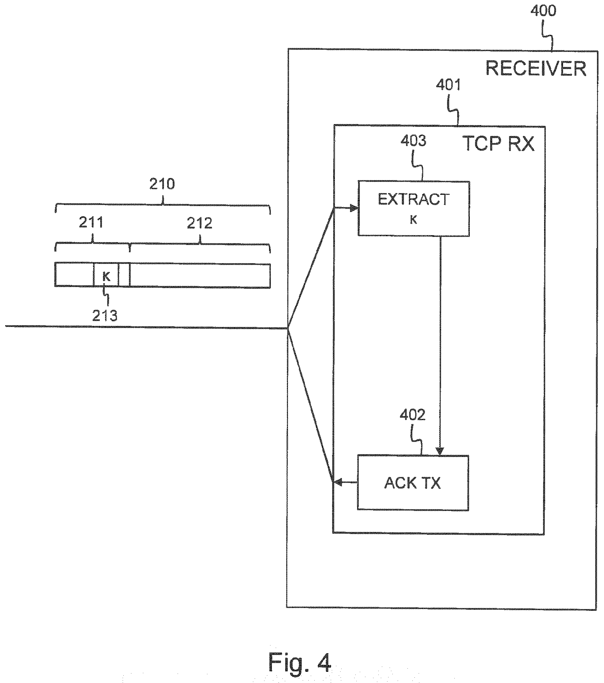

Fig. 4 shows the functional blocks of a receiver 400 operating according to an embodiment of the present invention. The receiver 400 comprises a TCP receiver 401 which, in addition to traditional technology to receive TCP packets and handover TCP packets to higher layers in the protocol stack like service or application layers, comprises a unit 403 that extracts the utility value $\kappa$ from the utility field 213 of a received TCP packet 210, and an receipt acknowledgement transmitter 402. The receipt acknowledgement transmitter receives the utility value $\kappa$ from the unit 403 and embeds this utility value $\kappa$ in the acknowledgement message that is sent back to the sender of the received TCP data packet 210. The sender that receives the congestion signals in the form of altered utility values relayed by a receiver, react as normal TCP data packet sources to these congestion signals.

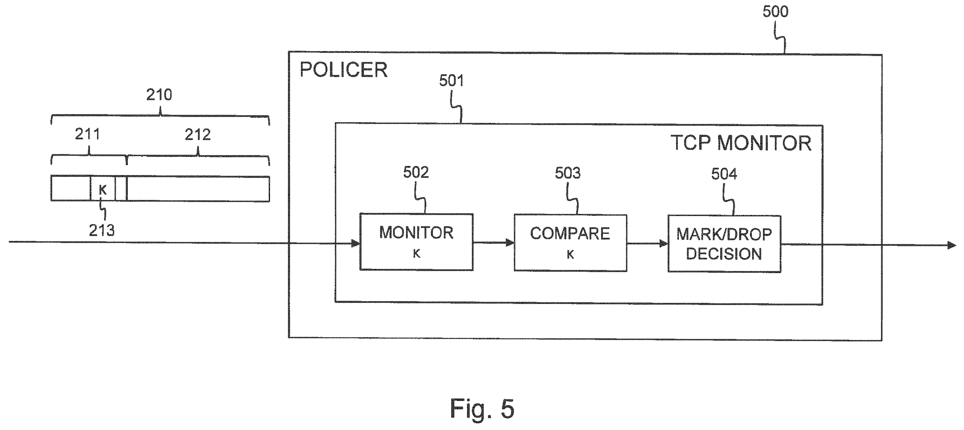

Senders of TCP traffic may not be inclined to voluntarily sacrifice some of their throughput in favour of other senders. Therefore, it may be of interest to check or police at the entrance of the network by a network edge node. Such network edge node or policer 500 is drawn in Fig. 5 and may represent a stand-alone node in the network 110 or be integrated in a network node like 111 or 115 that also routes data packets. The policer 500 has a TCP monitoring unit 501 comprising a first unit 502 that monitors the utility value $\kappa$ in the utility field 213 of a TCP packet 210 that enters the network 110, a second unit 503 that compares the utility values monitored in the TCP packets of a data stream with the utility values monitored in the TCP packets of different data streams. This may for instance be done by maintaining a histogram of utility values for each of the data streams, or alternatively for each of the senders. A malicious sender will have outliers in its histogram(s). Low utility values will for instance represent a higher percentage in the histogram. When this higher percentage exceeds a certain threshold, e.g. 20 % in comparison to histograms of other senders, the sender or data stream under consideration is considered an outlier and measures will be taken by a third unit 504 of the TCP monitor 501. The third unit 504 will drop packets of malicious senders or mark packets of malicious senders, e.g. by systematically increasing the utility values in the packets sent by such senders as a result of which these data packets will experience an artificially higher congestion level in the network.

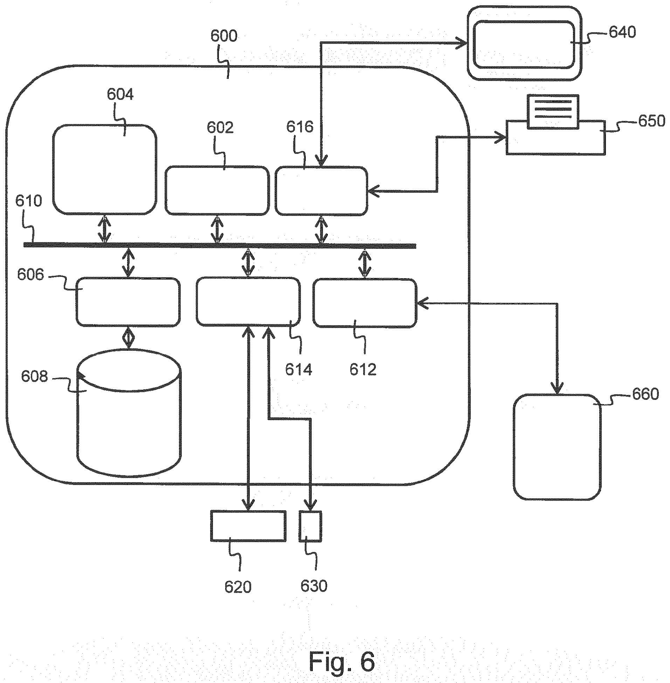

Fig. 6 shows a suitable computing system 600 for hosting one or more of the functions implemented by the functional blocks 202, 203, 305, 306, 403, 402, 502, 503 and 504 described here above with reference to Fig. 2-5. Computing system 600 may in general be formed as a suitable general purpose computer and comprise a bus 610, a processor 602, a local memory 604, one or more optional input interfaces 614, one or more optional output interfaces 616, a communication interface 612, a storage element interface 606 and one or more storage elements 608. Bus 610 may comprise one or more conductors that permit communication among the components of the computing system. Processor 602 may include any type of conventional processor or microprocessor that interprets and executes programming instructions. Local memory 604 may include a random access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator to input information to the computing device 600, such as a keyboard 620, a mouse 630, a pen, voice recognition and/or biometric mechanisms, etc. Output interface 616 may comprise one or more conventional mechanisms that output information to the operator, such as a display 640, a printer 650, a speaker, etc. Communication interface 612 may comprise any transceiver-like mechanism such as for example two 1Gb Ethernet interfaces that enables computing system 600 to communicate with other devices and/or systems, for example mechanisms for communicating with one or more other computing systems. The communication interface 612 of computing system 600 may be connected to such another computing system 660 by means of a local area network (LAN) or a wide area network (WAN, such as for example the internet, in which case the other computing system may for example comprise a suitable web server. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example 1TB SATA disk drives, and control the reading and writing of data to and/or from these storage elements 608. Although the storage elements 608 above are described as a local disk, in general any other suitable computer-readable media such as a removable magnetic disk, optical storage media such as a CD or DVD, -ROM disk, solid state drives, flash memory cards, ... could be used.

Although embodiments of the present invention have been illustrated, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1.  A sender node (101, 102; 200) comprising a transport layer transmitter (201) adapted to transmit data packets (210) of one or more data streams (DS1, DS2), each data packet (210) having a transport layer overhead section (211) and transport layer payload section (212),
    **CHARACTERIZED IN THAT** said transport layer transmitter (201) comprises:

    - a utility value determination unit (202) adapted to determine for a data stream (DS1, DS2) a utility value indicative for the utility perceived for said data stream (DS1, DS2); and
    - a utility field generation unit (203) adapted to embed said utility value in a utility field (213) of said transport layer overhead section (211) of a data packet (210) of said data stream (DS1, DS2) before transmission.

2.  A sender node (101, 102; 200) according to claim 1, wherein said transport layer transmitter (201) is a Transmission Control Protocol or TCP transmitter, said data packets (210) are TCP packets, and said utility field (213) is a TCP Options field.

3. A sender node (101, 102; 200) according to claim 1, wherein said utility value is determined through a concave function of the measured throughput of said data stream (DS1, DS2).

4. A sender node (101, 102; 200) according to claim 3, wherein said utility value is determined by:

$$\kappa = \beta \cdot \frac{\left(\frac{R}{R_{REF}}\right)^{1-\alpha} - 1}{1-\alpha}$$

wherein:

$\kappa$ represents said utility value;
$\alpha$ represents a concavity parameter, having a positive value;
$\beta$ represents the elasticity of said utility value with respect to a relative increase in bit rate $(R-R_{REF}) / R_{REF}$, having a positive value;
R represents the measured throughput of said data stream (DS1, DS2); and
$R_{REF}$ represents an application desired minimal throughput for said data stream (DS1, DS2).

5. A sender node (101, 102; 200) according to claim 3, wherein said utility value is determined by:

$$\kappa = \beta \cdot \ln\left(\frac{R}{R_{REF}}\right)$$

wherein:

$\kappa$ represents said utility value;
$\beta$ represents the elasticity of said utility value with respect to a relative increase in bit rate $(R-R_{REF}) / R_{REF}$, having a positive value;
R represents the measured throughput of said data stream (DS1, DS2); and
$R_{REF}$ represents an application desired minimal throughput for said data stream (DS1, DS2).

6. A transport layer transmitting method for transmitting data packets (210) of one or more data streams (DS1, DS2) at the transport layer, each data packet (210) having a transport layer overhead section (211) and transport layer payload section (212),
**CHARACTERIZED IN THAT** said method comprises:

- determining for a data stream (DS1, DS2) a utility value indicative for the utility perceived for said data stream (DS1, DS2); and
- embedding said utility value in a utility field (213) of said transport layer overhead section (211) of a data packet (210) of said data stream (DS1, DS2) before transmission.

7. An intermediate network node (111, 112, 113, 114, 115; 300) comprising a transport layer transceiver (301) adapted to receive data packets (210) of one or more data streams (DS1, DS2), temporarily store said data packets (210) in a buffer (303), and transmit said data packets (210) towards respective destinations, each data packet (210) having a transport layer overhead section (211) and transport layer payload section (212),
**CHARACTERIZED IN THAT** said transport layer transceiver (301) comprises:

- a transport layer processor (305) adapted to extract a utility value from a utility field (213) of said transport layer overhead section (211) of a received data packet (210); and
- a data packet drop/mark engine (306) adapted to take a drop or mark decision for said data packet (210) depending on said utility value and a buffer fill level of said buffer (303).

8. An intermediate node (111, 112, 113, 114, 115; 300) according to claim 7, wherein said drop or mark decision is determined through a drop or mark probability function that is increasing with increasing values of said utility value.

9. An intermediate node (111, 112, 113, 114, 115; 300) according to claim 8, wherein said probability function is determined by:

$$\Gamma(\kappa) = p_0 . e^{2\gamma\kappa}$$

wherein:

$\Gamma$ represents said probability function;
$\kappa$ represents said utility value;
$p_0$ represents a traditional active queue management (AQM) mark probability; and
$\gamma$ represents a design parameter whose value is selected in trade-off between convergence and oscillation of throughput rates of said one or more data streams (DS1, DS2).

10. A transport layer processing method for processing data packets (210) at the transport layer comprising receiving data packets (210) of one or more data streams (DS1, DS2), temporarily storing said data packets (210) in a buffer (303), and transmitting said data packets (210) towards respective destinations, each data packet (210) having a transport layer overhead section (211) and transport layer payload section (212),
**CHARACTERIZED IN THAT** said method further comprises:

- extracting a utility value from a utility field (213) of said transport layer overhead section (211) of a received data packet (210); and
- taking a drop or mark decision for said data packet (210) depending on said utility value and a buffer fill level of said buffer (303).

11. A receiver node (121, 122, 123; 400) comprising a transport layer receiver (401) adapted to receive data packets (210) of one or more data streams (DS1, DS2), each data packet (210) having a transport layer overhead section (211) and transport layer payload section (212), said transport layer receiver (401) comprising:

- an acknowledgement transmitter (402) adapted to transmit an acknowledgement message in return to a received data packet (210),
**CHARACTERIZED IN THAT** said transport layer receiver (401) further comprises:
- a transport layer processor (403) adapted to extract a utility value from a utility field (213) of said transport layer overhead section (211) of said received data packet; (210) and wherein
- said acknowledgement transmitter (402) is adapted to embed said utility value in said acknowledgement message.

12. A transport layer receiving method for receiving data packets (210) of one or more data streams (DS1, DS2) at the transport layer, each data packet (210) having a transport layer overhead section (211) and transport layer payload section (212), said method comprising transmitting an acknowledgement message in return to a received data packet (210),
**CHARACTERIZED IN THAT** said method further comprises:

- extracting a utility value from a utility field (213) of said transport layer overhead section (211) of said received data packet (210); and
- embedding said utility value in said acknowledgement message.

13. A policing network node (500) comprising a transport layer monitor (501) adapted to monitor data packets (210) of plural data streams (DS1, DS2), each data packet (210) having a transport layer overhead section (211) and transport layer payload section (212),
**CHARACTERIZED IN THAT** said transport layer monitor (501) comprises:

- a utility value monitor (502) adapted to monitor a utility value from a utility field (213) of said transport layer overhead section (211) of received data packets (210);
- a utility value comparator (503) adapted to compare utility values of data packets (210) belonging to different data streams (DS1, DS2);
- a packet drop/mark engine (504) adapted to drop or mark data packets (210) belonging to a data stream (DS1, DS2) whose monitored utility values represent an outlier.

14. A policing network node (500) according to claim 13, wherein:

- said utility value comparator (503) is adapted to maintain a histogram of utility values for each one of said data streams (DS1, DS2); and
- said packet drop/mark engine (504) is adapted to consider a data stream (DS1, DS2) as an outlier when the percentage of utility values below a predetermined first threshold exceeds a predetermined second threshold.

15. A transport layer policing method comprising monitoring data packets (210) of plural data streams (DS1, DS2), each data packet (210) having a transport layer overhead section (211) and transport layer payload section (212), **CHARACTERIZED IN THAT** said transport layer policing method comprises:

- monitoring a utility value from a utility field (213) of said transport layer overhead section (211) of received data packets (210);
- comparing utility values of data packets (210) belonging to different data streams (DS1, DS2); and
- dropping or marking data packets (210) belonging to a data stream (DS1, DS2) whose monitored utility values represent an outlier.

Fig. 1

TCP NETWORK

101

S1

DS1

111

N1

121

R1

113

N3

112

N2

122

R2

115

N5

114

N4

102

S2

DS2

123

R3

EP 3 185 493 A1

Fig. 2

EP 3 185 493 A1

Fig. 3

Fig. 4

Fig. 5

Fig. 6

EP 3 185 493 A1

Europäisches Patentamt
European Patent Office
Office européen des brevets

# EUROPEAN SEARCH REPORT

Application Number

EP 15 29 0331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2012/176903 A1 (KASTENHOLTZ FRANK [US] ET AL) 12 July 2012 (2012-07-12)<br>* paragraph [0054] - paragraph [0065] *<br>* paragraph [0088] - paragraph [0095] *<br>* paragraph [0129] - paragraph [0130] *<br>* figures 10,11,12,23 * | 1,2,6,7, 10,13-15<br>3-5 | INV.<br>H04L12/801<br>H04L12/851<br>H04L12/833 |
| X | US 2009/225655 A1 (RAY AMAR NATH [US] ET AL) 10 September 2009 (2009-09-10)<br>* paragraph [0013] - paragraph [0019] *<br>* paragraph [0027] - paragraph [0029] *<br>* figures 1,2,3 * | 11,12 | |
| Y | JEONGHOON MO ET AL: "Fair End-to-End Window-Based Congestion Control",<br>IEEE / ACM TRANSACTIONS ON NETWORKING,<br>IEEE / ACM, NEW YORK, NY, US,<br>vol. 8, no. 5, 1 October 2000 (2000-10-01)<br>, XP011038889,<br>ISSN: 1063-6692<br>* the whole document * | 3-5 | |
| | | | TECHNICAL FIELDS SEARCHED (IPC) |
| X | US 2003/007454 A1 (SHOREY RAJEEV [IN]) 9 January 2003 (2003-01-09)<br>* paragraph [0014] *<br>* paragraph [0032] - paragraph [0057] *<br>* claims 1-29 *<br>* figures 1,2 * | 7-10,13, 15 | H04L |

The present search report has been drawn up for all claims

| Place of search | Date of completion of the search | Examiner |
|---|---|---|
| The Hague | 23 June 2016 | Mavridis, Theodoros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

## ANNEX TO THE EUROPEAN SEARCH REPORT
## ON EUROPEAN PATENT APPLICATION NO.

EP 15 29 0331

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2016

| Patent document cited in search report | Publication date | Patent family member(s) | Publication date |
|---|---|---|---|
| US 2012176903 A1 | 12-07-2012 | US 2012176903 A1<br>WO 2012161868 A1 | 12-07-2012<br>29-11-2012 |
| US 2009225655 A1 | 10-09-2009 | NONE | |
| US 2003007454 A1 | 09-01-2003 | NONE | |

EPO FORM P0459

For more details about this annex : see Official Journal of the European Patent Office, No. 12/82